# EUROPÄISCHE PATENTSCHRIFT

(11) **EP 2 565 106 B1**
(45) Veröffentlichungstag und Bekanntmachung des Hinweises auf die Patenterteilung: **03.12.2014**
(21) Anmeldenummer: 12175100.2
(22) Anmeldetag: 05.07.2012
(51) Int. Cl.: B62D 15/02, B60W 30/12, B60W 30/18

(54) **Verfahren zur Fahrspur-Überwachung und Fahrspur-Überwachungssystem für ein Fahrzeug**
Method for monitoring lanes and lane monitoring system for a vehicle
Procédé de surveillance de voie de circulation et système de surveillance de voie de circulation pour un véhicule

(30) Priorität: 31.08.2011 DE 102011081892
(43) Veröffentlichungstag der Anmeldung: 06.03.2013
(73) Patentinhaber: ROBERT BOSCH GMBH, 70442 Stuttgart (DE)
(72) Erfinder: Niem, Wolfgang, 31141 Hildesheim (DE)

(56) Entgegenhaltungen:
- EP-A2- 1 225 424
- EP-A2- 1 422 111
- DE-A1-102004 026 590
- US-B2- 7 400 236

## Beschreibung

### Stand der Technik

Ein Fahrspurverlassens-Warnsystem (LDW, Lane Departure Warning) stellt eine Fahrerassistenz-Funktion dar, die während der Fahrt überprüft, ob das Fahrzeug die derzeitige Fahrspur einhält oder zum Verlassen der Fahrspur neigt. Hierzu werden im Allgemeinen seitliche Begrenzungslinien der Fahrspur von einer oder mehreren Kameras des Fahrzeugs erfasst.

Die DE 195 07 957 C1, DE 199 37 489 B4 und US 7 400 236 B2 zeigen derartige Fahrspur-Überwachungssysteme mit Fahrspurverlassens-Warnfunktion. Typischerweise beruhen derartige Funktionen auf der Auswertung von Bildsequenzen einer nach vorne gerichteten Kamera. Die US 7 400 236 B2 schlägt den Einsatz einer derartigen Frontkamera und einer zusätzlichen Rückfahrkamera vor, um die seitlichen Linien vorne und hinten zu erfassen.

Um den Fahrer bereits vor dem tatsächlichen Verlassen der Fahrspur zu warnen, wird bei einigen LDW-Systemen eine Zeit bis zum Kreuzen der seitlichen, die Fahrspur markierenden Linie als t_{LC} (time to line-crossing) ermittelt und mit einem Schwellwert verglichen. Bei Unterschreiten dieses Schwellwertes wird das LDW-Signal ausgegeben, z. B. an eine Anzeigeeinrichtung im Cockpit.

Derartige Warnsignale können für den Fahrer jedoch auch störend sein und ihn bei dynamischen Fahrvorgängen ablenken, wenn er z. B. bewusst die Fahrspur verlassen will.

Die EP-A-1422111 zeigt ein Verfahren und eine Vorrichtung zur Vorhersage eines Fahrzeugverhaltens. Hierbei wird das voraussichtliche Überfahren einer Fahrbahnbegrenzung ermittelt, wobei zusätzlich zu einem voraussichtlichen ersten Überfahren ein voraussichtliches weiteres Überfahren der Fahrbahnbegrenzung ermittelt wird. Hierbei sind eine Bildverarbeitungseinheit, eine Datenverarbeitungseinheit und eine Berechnungseinheit für Parameter und Modelle sowie für Schnittpunkte vorgesehen. Die Bildverarbeitungseinheit nimmt Bilder des Fahrbahnverlaufs und der Position des Fahrzeugs in Bezug auf den Fahrbahnverlauf auf. In der Berechnungseinheit für Parameter und Modelle können Parameter für die Erstellung eines Fahrbahnmodells und für den prädiktiven Spurverlauf des Fahrzeugs ermittelt werden, aus denen der voraussichtliche Fahrbahnverlauf und der voraussichtliche Spurwechsel des Fahrzeugs ermittelt werden.

Die US-B-7400236 beschreibt ein Fahrbahn-Überwachungssystem mit einer Frontkamera zum Erfassen eines Bereichs vor dem Fahrzeug, sowie einer Rückfahrkamera, die einen Bereich hinter dem Fahrzeug erfasst. Die Fahrspur vor dem Fahrzeug wird hierbei mittels der Bilddaten der Frontkamera ermittelt.

Die EP-A-1225424 beschreibt ein Verfahren zur Fahrdynamikregelung in einem Fahrzeug, bei dem Daten eines Navigationssystems aufgenommen und automatisch fahrdynamische Eingriffe vorgenommen werden. Hierbei wird eine Qualitätsinformation über die Daten des Navigationssystems gebildet. Die von den Daten des Navigationssystems abhängigen Eingriffe werden unter Berücksichtigung dieser Qualitätsinformation durchgeführt.

### Offenbarung der Erfindung

Der Erfindung liegt der Gedanke zugrunde, bei Verlassen der Fahrspur zu überprüfen, ob ein bewusstes Verkürzen der Trajektorie des Fahrzeugs in einer Kurve vorliegt, das allgemein auch als "Kurvenschneiden" bezeichnet wird. Bei übersichtlicher Fahrbahn will ein Fahrer zum Teil die Kurven seiner Fahrspur nicht vollständig ausfahren, sondern schneidet bzw. kürzt den Kurvenverlauf seiner Fahrspur gegebenenfalls etwas ab.

In derartigen Situationen kann die Ausgabe des LDW-Signals (Fahrspurverlassens-Warnsignals) störend oder auch verwirrend sein. Eine zu häufige Ausgabe des LDW-Signals kann ggf. auch dazu führen, dass der Fahrer diese Funktion nicht beachtet oder ganz abstellt, so dass er nachfolgend jedoch auch bei unbeabsichtigtem Verlassen der Kurve, z. B. aufgrund Ermüdung, nicht mehr entsprechend gewarnt werden kann.

Um ein beabsichtigtes Trajektorienverkürzen von einem unbeabsichtigten Verlassen der Fahrspur zu unterscheiden, werden vorteilhafterweise relevante Entscheidungskriterien angesetzt. Bei Erfüllen dieser Kriterien wird somit ein LDW-Signal nicht ausgegeben, obwohl ein LDW-Kriterium (Fahrspurverlassens- Kriterium) erfüllt ist, wonach erkannt worden ist, dass ein Verlassen der Fahrspur unmittelbar bevorsteht oder auch bereits begonnen hat.

Die Entscheidungskriterien zielen vorteilhafterweise darauf ab, festzustellen bzw. zu plausibilisieren, dass vor dem Fahrzeug eine Kurve liegt und der Fahrer bewusst auf eine andere Fahrspur wechselt. Hierzu dienen vorteilhafterweise folgende Entscheidungskriterien:

Gemäß einem ersten Entscheidungskriterium wird überprüft, ob nach den Kartendaten und der aktuellen Position (Map-Matched-Position) des Fahrzeugs in dieser Karte vor dem Fahrzeug eine Kurve liegt. Hierzu wird vorteilhafterweise ein Kurvenradius der Strecke vor dem Fahrzeug, z. B. eines Fahrstreckenbereichs von 20 - 100 m vor dem Fahrzeug, auf eine Kurve untersucht und überprüft, ob der Kurvenradius unterhalb einer Schwelle liegt und/oder die Längserstreckung der Kurve unterhalb einer Schwelle liegt. Durch dieses Entscheidungskriterium soll eine gerade oder relativ schwach gekrümmte Strecke vor dem Fahrzeug ausgeschlossen werden.

Ein zweites Entscheidungskriterium bewertet die Güte oder Qualität der Position des Fahrzeugs in der Karte bzw. den Kartendaten, d. h. eine Güte oder Qualität der Map-Matched-Position des eigenen Fahrzeugs sowie ggf. auch der Fahrstrecke vor dem Fahrzeug, insbesondere die geschätzte Güte des ermittelten Kurvenradius. Wenn diese Güte oder Qualität erreicht ist, kann mit hinreichender Sicherheit eine vorausliegende Kurvenfahrt angenommen werden. Falls die zur Verfügung stehenden Kartendaten und die globale Positionsbestimmung grundsätzlich bereits so gut sein sollten, dass eine derartige Qualität selbstverständlich ist, kann das zweite Entscheidungskriterium auch als immanent zutreffend angenommen werden und hier nicht abgefragt werden. Gegebenenfalls kann dann stattdessen der Eingang einer Fehlermeldung abgefragt werden.

Ein drittes Entscheidungskriterium überprüft, ob der Fahrer auf eine andere Fahrspur wechselt und nicht die Fahrbahn ganz verlässt. Bei einer zweispurigen Fahrbahn ist somit nur ein Spurwechsel auf die andere Fahrspur, d.h. im allgemeinen die Gegenspur zulässig. Somit wird dann überprüft, ob die in Kürze oder bereits überfahrene, die Fahrspur begrenzende Linie eine innenliegende Linie der Kurve ist. Bei Kreuzen/ Überschreiten einer äußeren Fahrbahnlinie kann hingegen ausgeschlossen werden kann, dass ein Vorgang des Trajektorienverkürzens beabsichtigt ist. Das dritte Entscheidungskriterium kann grundsätzlich aus den Kamerasignalen und Kartendaten ermittelt werden, bei zweispuriger Fahrbahn und Rechtsverkehr auch aus der Richtung der Querbeschleunigung oder dem Vorzeichen der Gierrate.

Ein viertes Entscheidungskriterium überprüft, ob der Fahrer aktiv lenkt. Dem liegt der Gedanke zugrunde, dass nur ein beabsichtigtes Trajektorienverkürzen (Kurvenschneiden) zugelassen werden soll, nicht hingegen ein Trajektorienverkürzen aufgrund Nachlässigkeit oder gegebenenfalls verminderter Aufmerksamkeit oder Schläfrigkeit des Fahrers. Eine aktive Lenkung des Fahrers kann zum einen aus Fahrdynamik-Messsignalen des Autos überprüft werden, insbesondere aus einem Lenkwinkelsignal, falls das Fahrzeug einen Lenkwinkelsensor aufweist. Hierzu wird überprüft, ob ein Lenkwinkel oberhalb einer Schwelle vorliegt. Ergänzend oder alternativ kann z. B. auch die Querbeschleunigung eines Querbeschleunigungssensors als Messsignal aufgenommen werden, da eine Kurvenfahrt bzw. ein Lenkeinschlag entsprechend zu einer Fliehkraft führt, die entsprechend gemessen wird. Ergänzend oder alternativ zur Querbeschleunigung kann auch ein Gierraten-Sensor herangezogen werden, der somit die Gierrate bzw. Drehung um die Hochachse misst. Falls derartige Signale nicht vorliegen, kann z. B. auch die Fahrzeuggeschwindigkeit ergänzend mit den Kamerasignalen herangezogen werden, um aus der hierdurch ermittelten Trajektorie des Fahrzeugs zu bewerten, ob eine aktive Lenkung vorliegt.

Ergänzend sind weitere Entscheidungskriterien möglich. So kann z. B. bei Vorliegen eines Abstandssensors oder eines Sensors zur Erfassung des Bereichs vor dem Fahrzeug überprüft werden, ob auf der Gegenfahrspur, auf die das Fahrzeug nach Überschneiden der Kurve gelangt, ein Verkehrsteilnehmer bzw. störendes Hindernis sich befindet, und in diesem Fall das LDW-Signal als Warnung ausgegeben werden. Ergänzend oder alternativ können auch allgemeine Fahrdynamikeigenschaften bzw. Fahreigenschaften herangezogen werden, insbesondere die Traktion bzw. Haftung der Räder auf dem Untergrund; somit kann bei zu schlechten Fahreigenschaften, bei denen z. B. ein plötzliches Zurückfahren auf die eigene Spur durch schnellen Lenkeinschlag oder Bremsung erschwert wäre, gegebenenfalls die Nicht-Ausgabe bzw. Unterdrückung der Ausgabe des LDW-Signals aufgehoben sein und somit bei Erkennen eines Spurverlassens immer das LDW-Signal ausgegeben werden.

Als weiteres Entscheidungskriterium kann vorgesehen sein, dass aus Kartendaten überprüft wird, ob in einem Streckenbereich von z. B. 100 m vor dem Fahrzeug eine Kreuzung liegt, um in einem solchen Fall ein Trajektorienverkürzen nicht zuzulassen, d.h. das LDW-Signal als Warnung auszugeben.

Die Entscheidungskriterien dienen somit dazu, die Aufgabe eines LDW-Signals zu unterdrücken, obwohl die LDW-Kriterien erfüllt sind.

Als Kamera wird lediglich eine Rückfahr-Kamera eingesetzt, aus deren Kamerasignalen die seitlichen Linien der Fahrspur und hieraus durch Präzidieren und/oder Extrapolation des rückwärtigen Verlaufs der seitlichen Linien nach vorne, z. B. mittels eines Kalmanfilters, die eigene Position des Fahrzeugs in der Fahrspur erkannt wird. Aus diesen Kamerasignalen zusammen mit den Navigationsdaten, d. h. der Bestimmung der eigenen Position durch eine globales Positionsbestimmungs-System zusammen mit Kartendaten, kann auf die vor dem Fahrzeug liegende Fahrbahn geschlossen werden.

Das erfindungsgemäße LDW-System weist somit eine Steuereinrichtung und eine Rückfahr-Kamera mit Mitteln zum Präzidieren des Fahrbahnverlaufs nach vorne, sowie z. B. eine Anzeigeeinrichtung zur Anzeige des LDW-Signals auf. Die Steuereinrichtung greift hierbei auf die Fahrdynamik-Signale des Fahrzeugs, z. B. über den fahrzeugeigenen CAN-Bus, sowie vorteilhafterweise auf Navigationssignale zurück.

Das Fahrspurverlassens-Warnsignal bzw. LDW-Signal kann als reines Warnsignal an eine Anzeigeeinrichtung für den Fahrer und/oder bei der Funktion eines selbsttätigen Spurhalte-Systems auch als Steuersignal für einen Fahrdynamikeingriff, z. B. Lenkeingriff und/oder unsymmetrischen Bremseneingriff, ausgeben werden.

Erfindungsgemäß wird somit in dem Fall, dass eine Beurteilung des Fahrzustandes des Fahrzeugs nach mindestens einem Fahrspurverlassens-Kriterium ergeben hat, dass ein relevantes Verhalten des Fahrzeugs vorliegt, wonach ein ganzes oder teilweises Verlassen des Fahrzeugs in Kürze erfolgen wird oder auch bereits begonnen hat, eine zusätzliche Überprüfung durchgeführt, ob relevante Entscheidungskriterien vorliegen, wonach das das Fahrspurverlassens-Warnsignal (LDW-Signal) dennoch nicht ausgegeben wird. Dieses Nicht-Ausgeben kann grundsätzlich als Unterdrückung der Ausgabe des Fahrspurverlassens-Warnsignals aufgefasst werden.

Weiterhin kann aber die zusätzliche Überprüfung auf das mindestens eine Entscheidungskriterium auch als Teil eines übergeordneten Gesamt- Fahrspurverlassens-Kriteriums aufgefasst werden bzw. einen Teil des Gesamt- Fahrspurverlassens-Kriteriums bilden; somit enthält in diesem Fall bzw. bei dieser Auslegung das Gesamt- Fahrspurverlassens-Kriterium das Fahrspurverlassens-Kriterium und weiterhin das mindestens eine Entscheidungskriterium als auflösende (negative Bedingung), wonach bei Erfüllen des mindestens einen Entscheidungskriteriums das Gesamt- Fahrspurverlassens-Kriterium nicht erfüllt ist.

Kurze Beschreibung der Zeichnungen
- Fig. 1: zeigt eine Fahrszene auf einer Fahrbahn bei Durchführung eines erfindungsgemäßen Verfahrens;

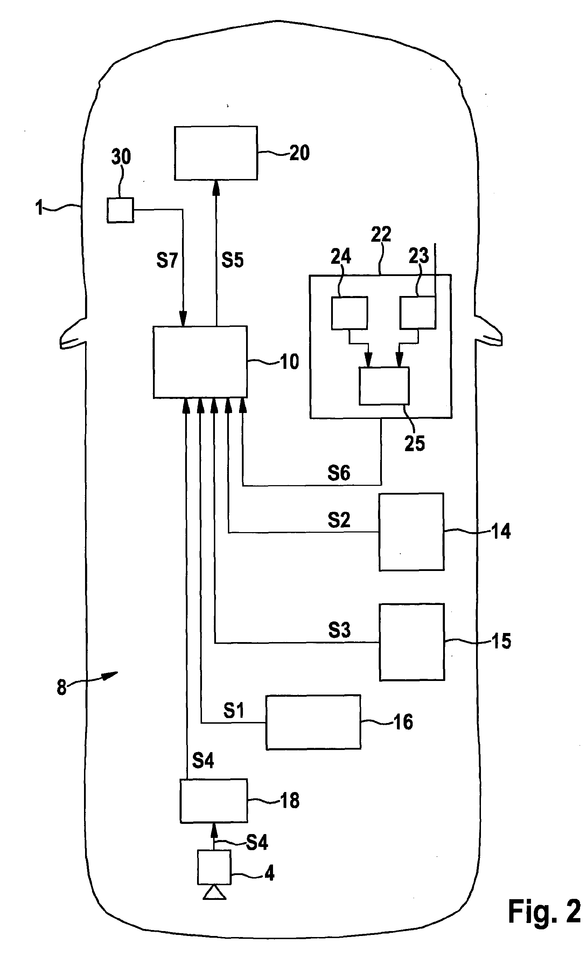

- Fig. 2: das Fahrzeug aus Fig. 1 in vergrößerter Darstellung;
- Fig. 3: ein Flussdiagramm des erfindungsgemäßen Verfahrens.

### Beschreibung der Ausführungsformen

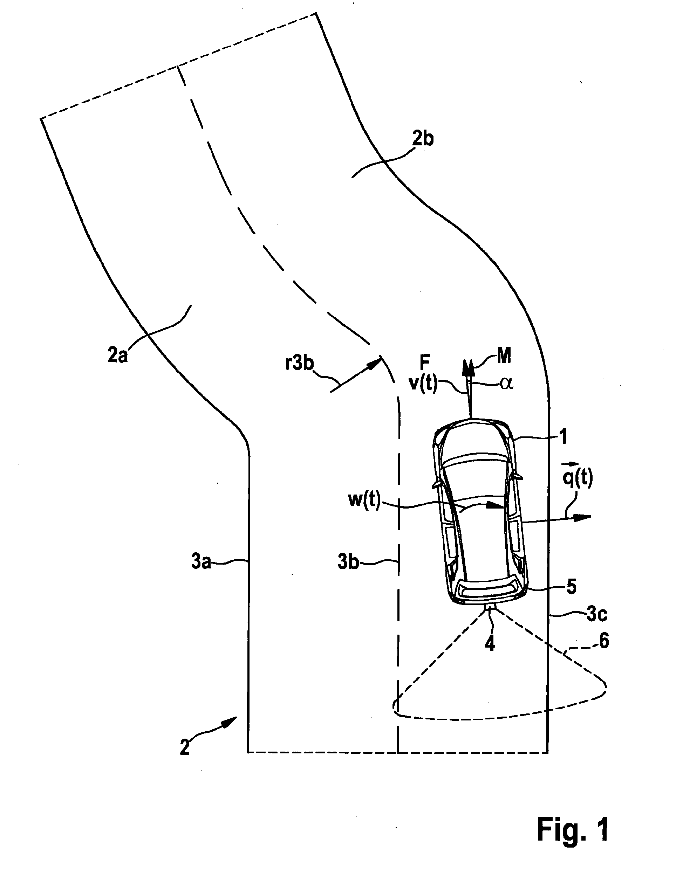

Ein Fahrzeug 1 fährt auf einer Fahrbahn 2 mit zwei Fahrspuren 2a, 2b; gemäß dem hier vorgesehenen Rechtsverkehr fährt das Fahrzeug 1 somit auf der rechten Fahrspur 2b. Die Fahrspuren 2a, 2b werden durch Fahrbahn-Linien 3a, 3b, 3c begrenzt, von denen 3a und 3c außenliegende Fahrbahn-Linien sind und 3b die innenliegende Fahrbahn-Linie zur Trennung der beiden Fahrspuren 2a, 2b darstellt. Die Linie 3b kann wie in Fig. 1 gezeigt anders ausgebildet sein, z. B. gestrichelt oder unterbrochen, oder auch den äußeren Fahrbahn-Linien 3a und 3c entsprechen.

Das Fahrzeug 1 fährt in einer Fahrtrichtung F mit einer Geschwindigkeit v (t), einer Querbeschleunigung q und einer Gierrate w (t), sowie einem Lenkeinschlag. Die Fahrtrichtung F entspricht der Richtung der Fahrgeschwindigkeit v (t), so dass hier F und v durch denselben Pfeil wieder gegeben sind, und stimmt bei ordnungsgemäßer Fahrt mit der Spurrichtung M, die durch die Fahrbahn-Linien 3b, 3c festgelegt ist, überein.

Das Fahrzeug 1 weist eine Rückfahr-Kamera 4 auf, die am Heck 5 des Fahrzeugs 1 befestigt ist und den Rückraum hinter dem Fahrzeug 1 einschließlich gegebenenfalls seitlicher Bereiche erfasst; der Erfassungsbereich 6 der Kamera 4 erfasst vorteilhafterweise jeweils die Linien 3b, 3c, die seine Fahrspur 2b begrenzen.

Das Fahrzeug 1 weist ein LDW-System 8 (Lane Departure Warning, Fahrspurverlassungs-Warnung) auf, das eine Steuereinrichtung 10 umfasst, die über einen fahrzeuginternen Datenbus, z. B. den CAN-Bus, Fahrzustands-Messsignale aufnimmt, insbesondere ein Fahrgeschwindigkeits-Signal aufnimmt mit Angaben über die Fahrgeschwindigkeit v, von einem evtl. vorhandenen Gierraten-Sensor 14 ausgegebene Gierraten- Signale S2 sowie von einem ggf. vorhandenen Querbeschleunigungs-Sensor 15 Querbeschleunigungs-Signale S3. Das Fahrgeschwindigkeits-Signal S1 wird z. B. als ABS-Referenzgeschwindigkeit von einer Steuereinrichtung 16 einer Fahrdynamik-Regelung, z. B. eines ABS und/oder ESP (Elektronisches Stabilitäts-Programm) und/oder ASR (AntriebsSchlupfregelung), zur Verfügung gestellt. Auch die Signale S2 und S3 können von den Sensoren 14, 15 zunächst an die Steuereinrichtung 16 des Fahrdynamikregelungs-Systems gegeben und dann über den CAN-Bus zur Verfügung gestellt werden.

Die Kamera 4 erfasst den Erfassungsbereich 6 und gibt Kamerasignale S4 (Bildsignale) aus, an eine Kamera-Steuereinrichtung 18, die z. B. die Steuereinrichtung eines Parkhilfesystems und/oder Umfeld- Überwachungssystems sein kann und die Kamerasignale S4 oder hieraus gebildete Signale über den CAN-Bus zur Verfügung stellt.

Aus den Kamerasignalen S4 wird durch die Steuereinrichtung 10 der Verlauf der seitlich begrenzenden Fahrbahn-Linien nach vorne prädiziert bzw. extrapoliert. Die Steuereinrichtung 10 des LDW-Systems ermittelt ein Verlassen der Fahrspur 2b als Kreuzen bzw. Überschreiten einer der beiden Fahrbahn-Linien 3b oder 3c. Hierbei kann die Steuereinrichtung 10 gemäß einem Spurwechselanzeige- Kriterium K0 das Überschreiten bereits im Voraus ermitteln und ein LDW-Signal (Fahrspurverlassens-Signal, Fahrspurverlassens-Warnsignal) S5 als Warnsignal an eine Anzeigeeinrichtung 20 für den Fahrer und/oder ggf. auch für einen Lenkeingriff bei der Funktion eines selbsttätigen Spurhalte-Systems ausgeben.

Die Steuereinrichtung 10 ermittelt hierzu zum einen die derzeitige Position des Fahrzeugs 1 in der Fahrspur 2b in Querrichtung, d.h. die Querposition (Ablage) und die Abweichung der Fahrtrichtung F gegenüber der Spurrichtung M (Richtung der Fahrspur), die z. B. als Gierwinkel α = α (t) beschrieben werden kann, dessen zeitliche Ableitung die Gierrate w (t) ist. Hieraus ermittelt die Steuereinrichtung 10 eine Zeit bis zum Kreuzen einer der Fahrbahn-Linien 3b, 3c als t_{LC} (time to line-crossing). Falls t_{LC} hinreichend klein ist, d. h., bei t_{LC} < t1, mit t1 als Zeit-Schwellwert, wird die Gefahr oder Wahrscheinlichkeit eines Spurverlassens erkannt. Zur Ermittlung von t_{LC} wird der aktuelle Abstand des Fahrzeugs 1 von den Fahrbahn-Linien 3b und 3c und die prognostizierte Trajektorie des Fahrzeugs 1 ermittelt, wobei diese Trajektorie aus der Position der von der Kamera 4 erkannten Fahrbahn-Linien 3b und 3c relativ zum Fahrzeug 1 und den Fahrdynamik-Daten, d. h. der Querbeschleunigung q und/oder Gierrate w, sowie der Fahrgeschwindigkeit v ermittelt wird.

Hierbei werden vorteilhafterweise auch Navigationsdaten über den vorausliegenden Verlauf der Fahrspur 2b herangezogen. Das Fahrzeug 1 weist hierzu eine Navigationseinrichtung 22 auf, die einen GPS-Empfänger 23, einen Kartenspeicher 24 zum Speichern von Kartendaten und wiederum eine Steuereinrichtung 25 aufweist. Die Steuereinrichtung 25 führt somit ein Match-Mapping bzw. eine Positionserkennung in den Kartendaten durch und gibt entsprechende Informationen, insbesondere einschließlich einer Qualitätsbewertung des Match- Mapping, als Navigationssignale S6 über den CAN-Bus an die Steuereinrichtung 10.

Die Steuereinrichtung 10 des LDW-Systems kann somit das Verlassen der Fahrspur 2b in Abhängigkeit der vorausliegenden Strecke bzw. des vorausliegenden Verlaufs der Fahrspur 2b erkennen.

Die Steuereinrichtung 10 ist mit einer Funktion zur Erkennung eines beabsichtigten Trajektorienverkürzens ausgestattet. Hierzu kann sie bei Erkennen eines voraussichtlichen Spurverlassens, d. h. im Fall t_{LC} < t1, die Ausgabe des LDW-Signals S5 unterdrücken, wenn sie erkennt, dass dieses Spurverlassen beabsichtigt ist und ein ungefährliches Trajektorienverkürzen darstellt.

Hierzu erkennt die Steuereinrichtung 10 des LDW-Systems, dass vor dem Fahrzeug 1 eine Kurve liegt, d. h. die eigene Fahrspur 2b sowie auch die gesamte Fahrbahn 2 eine Kurve beschreibt und der Fahrer die in der Kurve innenliegende Linie 3b schneiden will, d. h. kurzzeitig ganz oder teilweise überschreiten will, da er durch sein Fahrverhalten nachfolgend wieder vollständig auf die Fahrspur 2b gelangt.

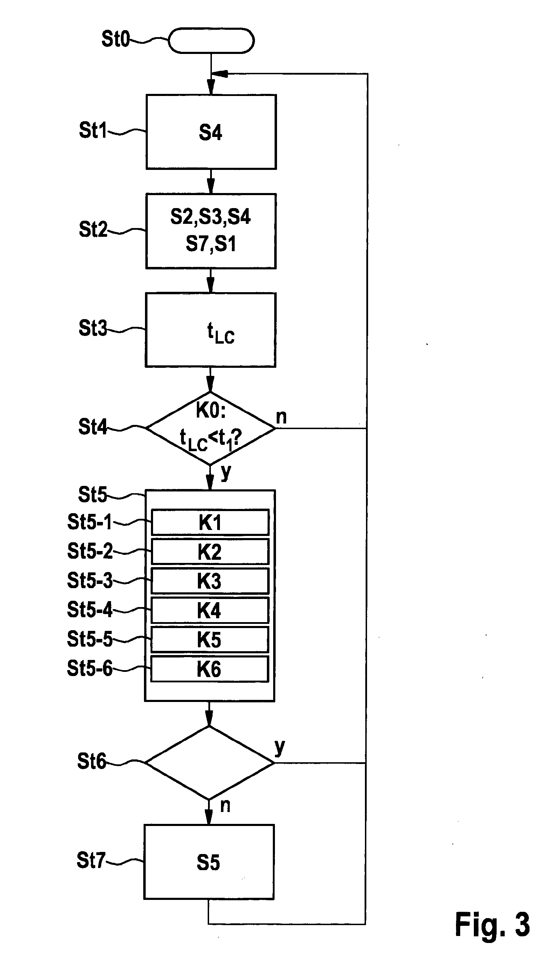

Gemäß Fig. 3 wird das Verfahren in Schritt St0 gestartet, z. B. bei Starten des Motors oder bei Erkennen einer Fahrgeschwindigkeit (v > 0), nachfolgend werden in Schritt St1 Kamerasignale S4 und in Schritt St2 Fahrdynamik-Messsignale S1, S2, S3 und gegebenenfalls S7 aufgenommen, wobei die Schritte St1 und St2 grundsätzlich parallel ablaufen. Gemäß Schritt St3 wird t_{LC} bestimmt und in Schritt St4 gemäß dem Spurwechselanzeige-Kriterium K0 mit dem Zeit-Schwellwert t1 verglichen, so dass gemäß dem Entscheidungsschritt St4 das Verfahren entweder wieder vor den Schritt St1 zurückgesetzt wird (Verzweigung n) oder gemäß Verzweigung y ein baldiges oder bereits begonnenes Spurverlassen erkannt wird.

Bei Erkennen eines baldigen oder bereits begonnenen Spurverlassens, d. h. t_{LC} ≥ t1, wird jedoch noch nicht sofort das LDW-Signal S5 ausgegeben. Es wird gemäß Schritt St5 vielmehr zunächst überprüft, ob ggf. ein beabsichtigtes Spurverlassen vorliegt. Hierzu werden folgende Entscheidungskriterien überprüft:
- K1:: Kurvenkriterium: weist die Fahrspur 2b vor dem Fahrzeug 1 eine Kurve auf?
Vorteilhafterweise wird hierbei überprüft, ob ein maximaler Kurvenradius (eine minimale Kurvenkrümmung) und/oder eine hinreichend lange Kurve vorliegt. Ein bewusstes Trajektorienverkürzen soll demnach nur erkannt werden, wenn eine hinreichend kleiner Kurvenradius r3b der eigenen Fahrspur 2b oder auch der zu schneidenden, innenliegenden Linie 3b vorliegt, d.h. ein Kurvenradius r3b unterhalb einer Schwelle.
Vorzugsweise soll ein Überschneiden bei einer "schwachen" Kurve ausgeschlossen werden soll. Somit werden vorzugsweise auch aktive Trajektorienverkürzungs-Vorgänge ausgeschlossen, bei denen langgezogene, schwache Kurven (geringer Krümmung) vom Fahrer geschnitten werden.
- K2:: Gütekriterium: liegt eine geschätzte Güte der Map-Matched-Position über einer Schwelle? dies bedeutet: kann die Position des Fahrzeugs 1, die aus dem GPS ermittelt wird, in den Kartendaten mit hinreichender Genauigkeit angegeben werden?
Dieses Gütekriterium kann auch die Kartendatendaten betreffen, z. B. mit der Anforderung, dass die Kartendaten nicht älter als ein festgelegtes Alter haben dürfen. K1 betrifft somit ein Gütekriterium für die eigene Map-Matched-Position und vorzugsweise auch die Güte der Bestimmung des Fahrbahn-Verlaufs der Fahrbahn 2 und der eigenen Fahrspur 2b vor dem Fahrzeug 1;
falls grundsätzlich davon ausgegangen werden kann, das die Güte der Map-Matched Position gut genug ist, kann K2 auch als implizit erfüllt angesehen werden, dann aber bei Anzeichen von Problemen bei der Güte gegebenenfalls ein Fehlersignal für K2 erzeugt werden.
- K3:: erfolgt in Kürze ein ganz oder teilweises Spurverlassen auf eine andere Fahrspur?
Wird auf eine andere Fahrspur gewechselt oder aber die Fahrbahn 2 ganz verlassen? Bei einer zweispurigen Fahrbahn 2 kann diese Frage somit darauf reduziert werden, ob eine innenliegende Kurve vorliegt:
ist die in der Zeit t_{LC} zu überfahrende Linie ist eine innenliegende Linie, gemäß Fig. 1 somit die Linie 3b. Bei Rechtsverkehr liegt somit jeweils eine Linkskurve vor (entsprechend bei Linksverkehr eine Rechtskurve).
Falls die Fahrbahn 2 jedoch mehr als zwei Fahrspuren aufweist, kann auch bei einer außenliegenden Kurve (bei Rechtsverkehr Rechtskurve) ein zulässiger Spurwechsel vorliegen.
K2 kann aus den Kartendaten und der Detektion, welche Fahrlinie gekreuzt wird, beantwortet werden. Bei z. B. Rechtsverkehr und zweispuriger Fahrbahn 2 reicht z. B. auch das Querbeschleunigungssignal S3 oder Gierratensignal S2, da nur Linkskurven zulässig sind.
- K4:: aktive Lenkung des Fahrers: ein beabsichtigtes Trajektorienverkürzen (Kurvenschneiden) soll nur aktiv durch den Fahrer möglich sein. Hierzu reicht z. B. bei Vorliegen eines Lenkwinkelsensors 30 ein Lenkwinkel-Signal S7, das einen Lenkwinkel oberhalb einer Schwelle und somit einen Lenkvorgang anzeigt.
Falls kein Lenkwinkelsensor vorhanden ist, kann die aktive Lenkung auch aus dem Querbeschleunigungs-Signal S3 und/oder dem Gierraten-Signal S2 ermittelt werden. Eine aktive Lenkung liegt demnach vor, wenn das Fahrzeug vom Fahrer mit eingeschlagenem Lenkwinkel gesteuert wird und somit eine Fliehkraft als Querbeschleunigung q und/oder eine Gierrate w als Drehung um die Hochachse (Gierachse) jeweils oberhalb einer Schwelle messbar ist. Eine weitere Möglichkeit der Detektion einer aktiven Lenkung besteht in der Ermittlung der Trajektorie des Fahrzeugs 1 relativ zu der Fahrspur 2b, wenn hieraus mit hinreichender Genauigkeit eine Kurvenfahrt erkannt werden kann.

Aus den Entscheidungskriterien K3 und K4 ergibt sich somit, dass ein aktives Lenken des Fahrzeugs 1 gegen die Fliehkraft vorliegt, da in der Kurve die innenliegende Linie 3b durch aktives Lenken überquert wird.

Ergänzend können weitere Entscheidungskriterien einbezogen werden:
- K5:: Kollisionserkennung: Ein ggf. im Fahrzeug 1 vorhandener Abstandssensor auf z. B. Radar-, Ultraschall- oder Stereokamera-Basis detektiert den Fahrraum vor dem Fahrzeug 1; der Erfassungsbereich erfasst aufgrund der Schrägstellung des Fahrzeugs 1 beim Trajektorienverkürzen grundsätzlich auch Teile der linken Fahrspur 2a. Die Steuereinrichtung 10 kann bei Vorhandensein derartiger Abstandssignale S8 eines Abstandssensors 30 eine mögliche Kollision mit einem entgegenkommenden Fahrzeug erkennen. Bei Erkennen einer derartigen möglichen Kollision auf der durch Trajektorienverkürzen gekreuzten linken Fahrspur 2a wird die Ausgabe des LDW-Signals S5 nicht unterdrückt, zusätzlich werden ggf. weitere Warnsignale oder Fahrdynamik-Eingriffe ausgegeben.
- K6:: Traktionsqualität: Falls die Steuereinrichtung 10 erkennt bzw. über den CAN-Bus 12 mitgeteilt bekommt, dass schlechte Fahrbahnverhältnisse bzw. eine schlechte Traktion oder ein schlechter Reibwert µ vorliegt, kann bewusst die Unterdrückung der Ausgabe des LDW-Signals S4 ausgeschlossen werden. Dem liegt der Gedanke zugrunde, dass bei schlechten Fahrbahnverhältnissen das Trajektorienverkürzen bewusst angezeigt werden soll, da es im Falle erforderlicher plötzlicher Korrekturen bei z. B. entgegen kommenden Fahrzeugen zu gefährlichen Situationen führen kann, und dem Fahrer daher sein riskantes Fahrverhalten bewusst sein soll.
- K7:: vorausliegende Verkehrssituation: Ist die Verkehrssituation bzw. Verkehrsführung der vorausliegenden Fahrtstrecke für einen Kurvenschneidvorgang nicht zu gefährlich? Oder liegen als gefährlich einzustufende Verkehrssituationen bzw. Verkehrsführungssituationen, z. B. Kreuzungen, Einfahrten oder Straßenverengungen in einem relevanten vorausliegenden Fahrstreckenbereich von z. B. 20 - 100 m vor dem Fahrzeug? So kann z. B. ein Kurvenschneidvorgang vor einer Kreuzung oder Einmündung als gefährlich eingestuft werden. Falls aus den Kartendaten eine derartige, für einen Kurvenschneidvorgang gefährlich einzuschätzende Verkehrssituation erkannt wird, kann vorgesehen sein, dass die Ausgabe des LDW-Signals S5 nicht unterdrückt wird. Neben derartigen, aus Kartendaten ableitbaren möglichen Gefahrensituationen können hier auch z. B. aktuelle Verkehrsinformationen verwertet werden, z. B. bei Mitteilung eines Staus und/oder eines Unfalls in einem vorausliegenden Fahrstreckenbereich vor dem Fahrzeug. Auch in solchen Fällen kann auf eine gefährliche vorausliegende Verkehrssituation erkannt werden und daraufhin dann die Ausgabe des LDW-Signals S5 nicht unterdrückt werden.

Die Entscheidungskriterien K5, K6 und K7 können einzeln oder in Kombination ergänzend eingesetzt werden.

An Fahrdynamik-Signalen reicht grundsätzlich auch das Fahrgeschwindigkeits-Signal S1, da aus diesem und bekannten Kartendaten sowie hinreichender Güte der Map-Matched-Position grundsätzlich die Querbeschleunigung ermittelt werden kann. Die zusätzliche Aufnahme eines Lenkwinkel-Signals und/oder Querbeschleunigungs-Signals S3 und/oder Gierraten-Signals S2 ist jedoch vorteilhaft.

Gemäß dem Flussdiagramm der Fig. 3 werden in Schritt St5 somit einzelne Schritte St5-1 bis St5-7 überprüft; die Reihenfolge der Schritte St5-1 bis St5-3 ist beliebig, insbesondere können sie auch parallel durchgeführt werden. Es können die weiteren Kriterien K5, K6 und K7 auch ergänzend in einem nachfolgenden Schritt überprüft werden, falls die Prüfung von K1 bis K4 die Unterdrückung der Ausgabe des LDW-Signals S5 prinzipiell zuließ.

Nachfolgend wird in dem Entscheidungsschritt St6 entschieden, ob die Entscheidungskriterien K1 bis K7 erfüllt sind; falls sie erfüllt sind, unterbleibt gemäß Verzweigung y die Ausgabe des LDW-Signals S5, und das Verfahren wird wiederum vor den Schritt St1 zurückgesetzt. Falls die Kriterien nicht erfüllt sind, wird gemäß Verzeigung n nachfolgend in Schritt St7 das LDW-Signal S5 ausgegeben und das Verfahren vor den Schritt St1 zurückgesetzt.

## Patentansprüche

1. Verfahren zur Fahrspurüberwachung eines Fahrzeugs (1), mit mindestens folgenden Schritten:
Erfassen einer Fahrspur (2b) des Fahrzeugs (1) mittels einer Kamera (4) des Fahrzeugs (1) (St1),
Aufnehmen von Fahrzustands-Messsignalen (S1, S2, S3, S7) des Fahrzeugs (1) (St2),
Beurteilen des Fahrzustandes des Fahrzeugs (1) nach mindestens einem Fahrspurverlassens-Kriterium (K0) (St3. St4),
Erzeugen eines Fahrspurverlassens-Warnsignals (S5) in Abhängigkeit der Bewertung nach dem Fahrspurverlassens-Kriterium (K0) (St7),
wobei bei Erfüllen des Fahrspurverlassens-Kriteriums (K0) überprüft wird, ob Entscheidungskriterien (K1, K2, K3, K4, K5, K6, K7) zum Erkennen eines beabsichtigten Trajektorienverkürzungs-Vorgangs erfüllt sind (St5, St6), und bei Erkennen eines beabsichtigten Trajektorienverkürzungs -Vorgangs eine Ausgabe des Fahrspurverlassens-Warnsignals (S5) nicht erfolgt (St6),
**dadurch gekennzeichnet, dass**
die Kamera (4) eine Rückfahr-Kamera (4) zur Erfassung eines Erfassungsbereichs (6) hinter dem Fahrzeug (1) ist und aus Kamera-Signalen (S4) der Kamera (4) ein Verlauf von die eigene Fahrspur begrenzenden Fahrbahnlinien (3b, 3c) hinter dem Fahrzeug und durch Extrapolation und/oder Prädizieren ein Verlauf der Fahrspur vor dem Fahrzeug (1) ermittelt oder abgeschätzt wird.

2. Verfahren nach Anspruch 1, **dadurch gekennzeichnet, dass** die Ermittlung oder Abschätzung durch Extrapolation und/oder Prädizieren mittels eines Kalman-Filters erfolgt.

3. Verfahren nach Anspruch 1 oder 2, **dadurch gekennzeichnet, dass** zum Erkennen eines beabsichtigten Trajektorienverkürzungs-Vorgangs mindestens eines der folgenden Entscheidungskriterien erfüllt sind:
ein erstes Entscheidungskriterium (K1), wonach die Fahrspur (2b) vor dem Fahrzeug (1) eine Kurve aufweist,
ein zweites Entscheidungskriterium (K2), wonach eine geschätzte Güte oder Qualität der Positionsbestimmung des Fahrzeugs (1) aus einem Positionsbestimmungssystem (GPS) und Kartendaten über einer Schwelle liegt,
ein drittes Entscheidungskriterium (K3), wonach ein in der Bewertung nach dem Fahrspurverlassens-Kriterium (K0) erkanntes, wahrscheinlich oder nachfolgend ganz oder teilweise erfolgendes Überqueren einer FahrbahnLinie (3b, 3c) zu einer anderen Fahrspur (2a) der Fahrbahn (2) erfolgt,
ein viertes Entscheidungskriterium (K4), wonach ein aktives Lenken des Fahrers erkannt wird.

4. Verfahren nach Anspruch 3, **dadurch gekennzeichnet, dass** ein beabsichtigter Trajektorienverkürzungs-Vorgang erkannt wird, wenn das erste, zweite, dritte und vierte Entscheidungskriterium (K1, K2, K3, K4) erfüllt sind.

5. Verfahren nach Anspruch 3 oder 4, **dadurch gekennzeichnet, dass** beim dritten Entscheidungskriterium (K3) und einer Fahrbahn (2) mit zwei Fahrspuren (2a, 2b) überprüft wird, ob eine vom Fahrzeug wahrscheinlich oder nachfolgend ganz oder teilweise zu überquerende Linie eine in der Kurve innenliegende Linie (3b) ist.

6. Verfahren nach einem der Ansprüche 3 bis 5, **dadurch gekennzeichnet, dass** ein aktives Lenken des Fahrers aus Fahrzustands-Messsignalen (S1, S2, S3, S7) des Fahrzeugs (1) erkannt wird.

7. Verfahren nach Anspruch 6, **dadurch gekennzeichnet, dass** zum Erkennen eines aktiven Lenkens eines oder mehrere der folgenden Fahrzustands-Messsignale verwendet werden:
ein Lenkwinkel-Signal (S7), das einen Lenkeinschlag oberhalb einer Schwelle anzeigt,
ein Querbeschleunigungs-Signal (S3), das eine Querbeschleunigung oder Fliehkraft oberhalb einer Schwelle anzeigt,
ein Gierraten-Signal (S2), das eine Gierrate des Fahrzeugs (1) oberhalb einer Schwelle anzeigt,
ein Fahrgeschwindigkeits-Signal (S1) in Kombination mit den Kamerasignalen (S4), aus denen eine Kurvenfahrt ableitbar ist.

8. Verfahren nach einem der Ansprüche 3 bis 7, **dadurch gekennzeichnet, dass** bei dem ersten Entscheidungskriterium (K1) überprüft wird, ob die Fahrstrecke vor dem Fahrzeug (1) eine Kurve mit einem Kurvenradius (r3b) unterhalb einer Schwelle und/oder oberhalb einer minimalen Längserstreckung aufweist.

9. Verfahren nach einem der Ansprüche 3 bis 8, **dadurch gekennzeichnet, dass** zum Erkennen eines beabsichtigten Trajektorienverkürzungs-Vorgangs weiterhin eines oder mehrere der folgenden weiteren Entscheidungskriterien erfüllt sind:
ein fünftes Entscheidungskriterium (K5), wonach bei einem Fahrzeug mit Kollisions-Warnsystem oder Abstands-Erfassungssystem bei der aktuellen Trajektorie des Fahrzeugs (1) keine Kollisionswarnung mit einem Objekt, z. B. einem entgegenkommenden Fahrzeug, vorliegt;
ein sechstes Entscheidungskriterium (K6), wonach eine Fahrbahnoberfläche oder ein Reibwert des Fahrzeugs (1) auf der Fahrspur (2b) als hinreichend gut bewertet wird;
ein siebtes Entscheidungskriterium (K7), wonach eine vorausliegende Verkehrssituation aus Kartendaten und/oder Verkehrsinformationen als nicht gefährlich eingestuft wird.

10. Verfahren nach einem der vorherigen Ansprüche, **dadurch gekennzeichnet, dass** bei dem Fahrspurverlassens-Kriterium (K0) eine Wahrscheinlichkeit und/oder ein Zeitpunkt (t_{LC}) eines Verlassens der Fahrspur (2b) des Fahrzeugs (1) überprüft wird.

11. Verfahren nach einem der vorherigen Ansprüche, **dadurch gekennzeichnet, dass** ein Gesamt- Fahrspurverlassens-Kriterium (K0) und das mindestens eine Entscheidungs-Kriterium (K1- K7) ein Gesamt- Fahrspurverlassens-Kriterium bilden und bei Erfüllen des Fahrspurverlassens-Kriteriums (K0) und Nicht-Erfüllen des mindestens einen Entscheidungs-Kriteriums (K1-K7) das Fahrspurverlassens-Warnsignal (S5) ausgegeben wird.

12. Fahrspurüberwachungs-System (8) für ein Fahrzeug (1), insbesondere zur Durchführung eines Verfahrens nach einem der vorherigen Ansprüche,
wobei das Fahrspurüberwachungs-System (8) eine Steuereinrichtung (10) und eine Kamera (4) aufweist,
wobei die Kamera (4) einen Erfassungsbereich (6) außerhalb des Fahrzeugs (1) erfasst und Kamerasignale (S49 ausgibt,
wobei die Steuereinrichtung (10) Fahrzustands- Messsignale (S1, S2, S3, S7) des Fahrzeugs (1) und die Kamerasignale (S4) der n Kamera (4) aufnimmt,
wobei die Steuereinrichtung (10) aus den Fahrzustands-Messsignalen (S1, S2, S3, S7) und den Kamerasignalen (S4) den Fahrzustand des Fahrzeugs (1) nach mindestens einem Fahrspurverlassens-Kriterium (K0) bewertet und ein Fahrspurverlassens-Warnsignal (S5) in Abhängigkeit der Bewertung nach dem Fahrspurverlassens-Kriterium (K0) ausgibt,
wobei die Steuereinrichtung (10) bei Erfüllen des Fahrspurverlassens- Kriteriums (K0) überprüft, ob Entscheidungskriterien (K1, K2, K3, K4, K5, K6, K7) zum Erkennen eines beabsichtigten Trajektorienverkürzungs-Vorgangs erfüllt sind (St5, St6), und bei Erkennen eines beabsichtigten Trajektorienverkürzungs-Vorgangs die Ausgabe des Fahrspurverlassens-Warnsignals (S5) unterdrückt,
**dadurch gekennzeichnet, dass**
die Kamera eine Rückfahrkamera (4) zur Erfassung eines Erfassungsbereichs (6) hinter dem Fahrzeug (1) ist, und
die Steuereinrichtung (10) aus den Kamera-Signalen (S4) einen Verlauf von die eigene Fahrspur begrenzenden Fahrbahnlinien (3b, 3c) hinter dem Fahrzeug (1) und durch Extrapolation und/oder Prädizieren einen Verlauf der Fahrspur vor dem Fahrzeug (1) ermittelt oder abschätzt.

13. Fahrspurüberwachungs-System (8) nach Anspruch 12, **dadurch gekennzeichnet, dass** die Steuereinrichtung (10) bei dem Fahrspurverlassens-Kriterium (K0) eine Wahrscheinlichkeit und/oder einen Zeitpunkt (t_{LC}) eines Verlassens der Fahrspur (2b) des Fahrzeugs (1) überprüft.

14. Fahrzeug (1) mit einem Fahrspur-Überwachungssystem (8) nach Anspruch 12 oder 13.

## Claims

1. Method for monitoring lanes for a vehicle (1), having at least the following steps:
capturing a lane (2b) of the vehicle (1) by means of a camera (4) of the vehicle (1) (St1),
recording driving state measurement signals (S1, S2, S3, S7) of the vehicle (1) (St2),
assessing the driving state of the vehicle (1) according to at least one lane-exiting criterion (K0) (St3, St4),
generating a lane-exiting warning signal (S5) as a function of the evaluation according to the lane-exiting criterion (K0)(St7),
wherein when the lane-exiting criterion (K0) is met it is checked whether decision criteria (K1, K2, K3, K4, K5, K6, K7) for the detection of an intended trajectory-shortening process are met (St5, St6), and
when an intended trajectory-shortening process is detected the lane-exiting warning signal (S5) is not output (St6),
**characterized in that**
the camera (4) is a rear view camera (4) for capturing a capturing area (6) behind the vehicle (1), and a profile of carriageway lines (3b, 3c), which bound the vehicle's own lane, behind the vehicle is determined or estimated from camera signals (S4) of the camera (4), and a profile of the lane in front of the vehicle (1) is determined or estimated by extrapolation and/or prediction.

2. Method according to Claim 1, **characterized in that** the determination or estimation is carried out by extrapolation and/or prediction by means of a Kalman filter.

3. Method according to Claim 1 or 2, **characterized in that** in order to detect an intended trajectory-shortening process, at least one of the following decision criteria are met:
a first decision criterion (K1), according to which the lane (2b) has a bend before the vehicle (1),
a second decision criterion (K2), according to which an estimated quality of the position determination of the vehicle (1) from a position-determining system (GPS) and map data is above a threshold,
a third decision criterion (K3), according to which a carriageway line (3b, 3c) is crossed to another lane (2a) of the carriageway (2), and said crossing is detected in the evaluation according to the lane-exiting criterion (K0) and takes place probably or subsequently entirely or partially, and
a fourth decision criterion (K4) according to which active steering by the driver is detected.

4. Method according to Claim 3, **characterized in that** an intended trajectory-shortening process is detected if the first, second, third and fourth decision criteria (K1, K2, K3, K4) are met.

5. Method according to Claim 3 or 4, **characterized in that** in the case of the third decision criterion (K3) and a carriageway (2) with two lanes (2a, 2b) it is checked whether a line probably or subsequently to be crossed entirely or partially by the vehicle is a line (3b) inside the bend.

6. Method according to one of Claims 3 to 5, **characterized in that** active steering by the driver is detected from driving state measurement signals (S1, S2, S3, S7) of the vehicle (1).

7. Method according to Claim 6, **characterized in that** in order to detect active steering one or more of the following driving state measurement signals are used:
a driving angle signal (S7) which indicates a steering lock above a threshold,
a transverse acceleration signal (S3) which indicates transverse acceleration or centrifugal force above a threshold,
a yaw rate signal (S2) which indicates a yaw rate of the vehicle (1) above a threshold,
a velocity signal (S1) in combination with the camera signals (S4) from which cornering can be derived.

8. Method according to one of Claims 3 to 7, **characterized in that** in the case of the first decision criterion (K1) it is checked whether the distance in front of the vehicle (1) has a bend with a bend radius (r3b) below a threshold and/or above a minimum longitudinal extent.

9. Method according to one of Claims 3 to 8, **characterized in that** in order to detect an intended trajectory-shortening process one or more of the following further decision criteria are also met:
a fifth decision criterion (K5) according to which in the case of a vehicle with a collision-warning system or distance-detection system there is no warning of a collision with an object, for example an oncoming vehicle, at the current trajectory of the vehicle (1);
a sixth decision criterion (K6) according to which a carriageway surface or a coefficient of friction of the vehicle (1) on the lane (2b) is sufficiently well evaluated;
a seventh decision criterion (K7) according to which a traffic situation lying ahead is categorized as non-hazardous on the basis of map data and/or traffic information.

10. Method according to one of the preceding claims, **characterized in that** in the case of the lane-exiting criterion (K0) a probability and/or a time (t_{LC}) of exiting of the lane (2b) of the vehicle (1) is checked.

11. Method according to one of the preceding claims, **characterized in that** a total lane-exiting criterion (K0) and the at least one decision criterion (K1-K7) form a total lane-exiting criterion, and when the lane-exiting criterion (K0) is met and the at least one decision criterion (K1-K7) is not met the lane-exiting warning signal (S5) is output.

12. Lane monitoring system (8) for a vehicle (1), in particular for carrying out a method according to one of the preceding claims,
wherein the lane monitoring system (8) has a control device (10) and a camera (4),
wherein the camera (4) captures a capturing area (6) outside the vehicle (1) and outputs camera signals (S4),
wherein the control device (10) picks up driving state measurement signals (S1, S2, S3, S7) of the vehicle (1) and the camera signals (S4) of the n camera (4),
wherein the control device (10) evaluates the driving state of the vehicle (1) on the basis of the driving state measurement signals (S1, S2, S3, S7) and the camera signals (S4) according to at least one lane-exiting criterion (K0), and outputs a lane-exiting warning signal (S5) as a function of the evaluation according to the lane-exiting criterion (K0),
wherein the control device (10) checks, in the case of the lane-exiting criterion (K0) being met, whether decision criteria (K1, K2, K3, K4, K5, K6, K7) for the detection of an intended trajectory-shortening process are met (St5, St6), and when an intended trajectory-shortening process is detected suppresses the outputting of the lane-exiting warning signal (S5),
**characterized in that**
the camera is a rear view camera (4) for capturing a capturing area (6) behind the vehicle (1), and the control device (10) determines or estimates on the basis of the camera signals (S4) a profile of carriageway lines (3b, 3c), which bound the vehicle's own lane, behind the vehicle (1), and determines or estimates a profile of the lane in front of the vehicle (1) by extrapolation and/or prediction.

13. Lane monitoring system (8) according to Claim 12, **characterized in that** in the case of the lane-exiting criterion (K0) the control device (10) checks, a probability and/or a time (t_{LC}) of exiting of the lane (2b) by the vehicle (1).

14. Vehicle (1) having a lane monitoring system (8) according to Claim 12 or 13.

## Revendications

1. Procédé de surveillance de voie de circulation d'un véhicule (1), avec au moins les étapes suivantes :
détection d'une voie de circulation (2b) du véhicule (1) à l'aide d'une caméra (4) du véhicule (1) (St1) ;
réception de signaux de mesure d'état de conduite (S1, S2, S3, S7) du véhicule (1) (St2) ;
jugement de l'état de conduite du véhicule (1) selon au moins un critère de sortie de voie de circulation (KO) (St3, St4) ;
production d'un signal d'avertissement de sortie de voie de circulation (S5) en fonction de l'évaluation,
selon le critère de sortie de voie de circulation (KO) (St7) ;
en cas de remplissage du critère de sortie de voie de circulation (KO), on vérifie si les critères de décision (K1, K2, K3, K4, K5, K6, K7) sont remplis afin d'identifier un processus de raccourcissement de trajectoire envisagé (St5, St6) et un envoi du signal d'avertissement de sortie de voie de circulation (S5) ne se produisant pas en cas d'identification d'un processus de raccourcissement de trajectoire envisagé (St6) ;
**caractérisé en ce que** :
la caméra (4) est une caméra de marche arrière (4) servant à détecter une zone de détection (6) derrière le véhicule (1) et une trajectoire des lignes de voie de circulation (3b, 3c) délimitant la voie de circulation empruntée est calculée ou évaluée derrière le véhicule à partir des signaux de caméra (S4) de la caméra (4) et une trajectoire de la voie de circulation devant le véhicule (1) étant calculée ou évaluée par extrapolation et/ou prédiction.

2. Procédé selon la revendication 1, **caractérisé en ce que** le calcul ou l'évaluation se produit par extrapolation et/ou prédiction à l'aide d'un filtre de Kalman.

3. Procédé selon la revendication 1 ou 2, **caractérisé en ce qu'**afin d'identifier un processus de raccourcissement de trajectoire envisagé, au moins un des critères de décision suivants est rempli :
un premier critère de décision (K1) selon lequel la voie de circulation (2b) présente un virage devant le véhicule (1) ;
un deuxième critère de décision (K2) selon lequel la valeur ou la qualité estimée de la détermination de la position du véhicule (1) provenant d'un système de détermination de la position (GPS) et de données cartographiques se situe au-delà d'un seuil ;
un troisième critère de décision (K3) selon lequel un franchissement, détecté dans l'évaluation selon le critère de sortie de voie de circulation (KO), risquant de se produire de façon vraisemblable ou se produisant ensuite pour tout ou partie, d'une ligne de voie de circulation (3b, 3c) se produit en direction d'une autre voie de circulation (2a) de la voie de circulation (2) ;
un quatrième critère de décision (K4) selon lequel un pilotage actif du conducteur est détecté.

4. Procédé selon la revendication 3, **caractérisé en ce qu'**un processus de raccourcissement de trajectoire envisagé est détecté lorsque le premier, le deuxième, le troisième et le quatrième critère de décision (K1, K2, K3, K4) sont remplis.

5. Procédé selon la revendication 3 ou 4, **caractérisé en ce que** dans le cas du troisième critère de décision (K3) et d'une voie de circulation (2) à deux voies de circulation (2a, 2b), on vérifie si une ligne risquant vraisemblablement d'être franchie par le véhicule ou étant ensuite franchie pour tout ou partie par le véhicule est une ligne (3b) se situant à l'intérieur du virage.

6. Procédé selon l'une quelconque des revendications 3 à 5, **caractérisé en ce qu'**un pilotage actif du conducteur est détecté à partir des signaux de mesure d'état de conduite (S1, S2, S3, S7) du véhicule (1).

7. Procédé selon la revendication 6, **caractérisé en ce qu'**afin d'identifier un pilotage actif, un ou plusieurs des signaux de mesure d'état de conduite suivants sont utilisés :
un signal d'angle de braquage (S7) indiquant un braquage supérieur à un seuil ;
un signal d'accélération transversale (S3) indiquant une accélération transversale ou une force centrifuge supérieure à un seuil ;
un signal de taux de lacet (S2) indiquant un taux de lacet du véhicule (1) supérieur à un seuil ;
un signal de vitesse de conduite (S1) permettant de déduire, en combinaison avec les signaux de caméra (S4), une conduite en virage.

8. Procédé selon l'une quelconque des revendications 3 à 7, **caractérisé en ce que** dans le cas du premier critère de décision (K1), on vérifie si le tronçon de conduite devant le véhicule (1) comporte un virage avec un rayon de courbure (r3b) inférieur à un seuil et/ou supérieur à une extension longitudinale minimale.

9. Procédé selon l'une quelconque des revendications 3 à 8, **caractérisé en ce qu'**afin d'identifier un processus de raccourcissement de trajectoire envisagé, on remplit en outre un ou plusieurs des critères de décision supplémentaires suivants :
un cinquième critère de décision (K5) selon lequel en présence d'un véhicule doté d'un système d'avertissement anti-collision ou d'un système de détection de distance par rapport à la trajectoire actuelle du véhicule (1), aucun avertissement de risque de collision avec un objet, par exemple un véhicule venant en sens contraire, n'est émis ;
un sixième critère de décision (K6) selon lequel une surface de voie de circulation ou un coefficient de frottement du véhicule (1) sur la voie de circulation (2b) est analysé comme satisfaisant ;
un septième critère de décision (K7) selon lequel une situation de trafic actuelle est classée comme non dangereuse à partir des données cartographiques et/ou des informations de trafic.

10. Procédé selon l'une quelconque des revendications précédentes, **caractérisé en ce que** pour le critère de sortie de voie de circulation (KO), une probabilité du moment auquel le véhicule (1) sort de la voie de circulation (2b) et/ou le moment (t_{LC}) auquel le véhicule sort de la voie de circulation est vérifié.

11. Procédé selon l'une quelconque des revendications précédentes, **caractérisé en ce qu'**un critère de sortie de voie de circulation (KO) global et l'au moins un critère de décision (K1-K7) forment un critère de sortie de voie de circulation global et que le signal d'avertissement de sortie de voie de circulation (S5) est émis en cas de remplissage du critère de sortie de voie de circulation (KO) et de non-remplissage de l'au moins un critère de décision (K1-K7).

12. Système de surveillance de voie de circulation (8) pour un véhicule (1), notamment de mise en oeuvre d'un procédé selon l'une quelconque des revendications précédentes ;
le système de surveillance de voie de circulation (8) comportant un dispositif de commande (10) et une caméra (4) ;
la caméra (4) détectant une zone de détection (6) à l'extérieur du véhicule (1) et émettant des signaux de caméra (S49 ;
le dispositif de commande (10) recevant les signaux de mesure d'état de conduite (S1, S2, S3, S7) du véhicule (1) et les signaux de caméra (S4) des n caméras (4) ;
le dispositif de commande (10) analysant, à partir des signaux de mesure d'état de conduite (S1, S2, S3, S7) et des signaux de caméra (S4), l'état de conduite du véhicule (1) selon au moins un critère de sortie de voie de circulation (KO) et émettant un signal d'avertissement de sortie de voie de circulation (S5) en fonction de l'évaluation selon le critère de sortie de voie de circulation (KO) ;
le dispositif de commande (10) vérifiant, en cas de remplissage du critère de sortie de voie de circulation (KO), si les critères de décision (K1, K2, K3, K4, K5, K6, K7) sont remplis afin d'identifier un processus de raccourcissement de trajectoire envisagé (St5, St6) et en cas d'identification d'un processus de raccourcissement de trajectoire envisagé, retient l'envoi du signal d'avertissement de sortie de voie de circulation (S5) ;
**caractérisé en ce que** :
la caméra est une caméra de marche arrière (4) servant à détecter une zone de détection (6) située derrière le véhicule (1) ; et
le dispositif de commande (10) calcule ou évalue, à partir des signaux de caméra (S4), une trajectoire des lignes de voie de circulation (3b, 3c) délimitant la voie de circulation, derrière le véhicule (1), sur laquelle se place le véhicule et calcule et évalue par extrapolation et/ou prédiction une trajectoire de la voie de circulation devant le véhicule (1).

13. Système de surveillance de voie de circulation (8) selon la revendication 12, **caractérisé en ce que** le dispositif de commande (10) vérifie, selon le critère de sortie de voie de circulation (KO), une probabilité de sortie de la voie de circulation (2b) du véhicule (1) et/ou le moment (t_{LC}) auquel le véhicule devrait sortir de la voie de circulation.

14. Véhicule (1) doté d'un système de surveillance de voie de circulation (8) selon la revendication 12 ou 13.
